# EUROPEAN PATENT SPECIFICATION

(11) **EP 0 898 510 B1**
(45) Date of publication and mention of the grant of the patent: **25.10.2000**
(21) Application number: 97923213.9
(22) Date of filing: 19.05.1997
(51) Int. Cl.: B32B 7/04, B29C 73/10

(54) **CURABLE SHEET MATERIAL**
HÄRTBARES FOLIENMATERIAL
MATERIAU PRESENT SOUS FORME DE FEUILLE DURCISSABLE

(30) Priority: 17.05.1996 GB 9610346
(43) Date of publication of application: 03.03.1999
(73) Proprietor: DUNNE, Desmond Charles, Stevenage, Hertfordshire G1 4QT (GB)
(72) Inventor: DUNNE, Desmond Charles, Stevenage, Hertfordshire G1 4QT (GB)
(74) Representative: Tribe, Thomas Geoffrey
(86) International application number: GB9701381
(87) International publication number: WO9744189

(56) References cited:
- WO-A-90/03887
- GB-A- 2 289 436
- US-A- 5 166 007

## Description

This invention relates to flexible plastics based laminated sheet incorporating material which is curable to set solid (commonly referred to as "Prepregs"). Examples of such material are described in GB 2,243,111B and GB 2,289,436A.

As described in GB 2,243,111B the layers of a laminate including curable polymer layers are, for example, dispensed from reels and brought together to be rolled onto an outer sheet; this is a typical manufacturing procedure which often introduces air into the uncured polymer. On curing this air has an adverse effect on the physical properties of the sheet material.

GB-A-2 289 436A describes a UV curable plastics sheet material for covering or repair purposes which includes a UV upper barrier layer to prevent premature hardening of the resin, and a laminate of two curable layers of resin incorporated materials.

The objective of the present invention is to reduce the introduction of air and also to reduce the effect any such air does have on the product.

Accordingly the present invention provides at least two layers impregnated with curable resin material and, between said layers, a barrier membrane which has been corona treated on both sides. This barrier membrane enables the resin materials to adhere to the barrier membrane with minimum entrapment of air and, also inhibits any air bubbles which do arise from coalescing to form voids of significant size.

This membrane is preferably formed of a UV transparent material and the resins are UV curable. An example of the membrane is polyethylene film corona treated on both sides to improve bonding in the laminate. Corona treatment is an electrical treatment known in the printing industry to enhance adhesion of printing material and on plastics films in general to improve wetting.

Other plastics materials can be used for the membrane provided they meet operational requirements which are essentially:
1) When UV curable resins are used, the membrane material is UV transparent
2) the material is sufficiently impervious to air
3) the material has suitable mechanical properties in being relatively flexible and relatively tough
4) the material can be subjected to a corona treatment to improve its wettability
5) The material is compatible with the resins to be used.

Three examples will now be described with reference to the accompanying schematic drawings:
Figure 1 shows a patch material for industrial or trade usage,
Figure 2 shows a patch material for DIY usage; and
Figure 3 shows a sheet material for trade use.

The membrane in accordance with the invention can advantageously be included in a piece or patch of a UV settable material, or may be incorporated in sheet material supplied in a continuous form, such as on reels.

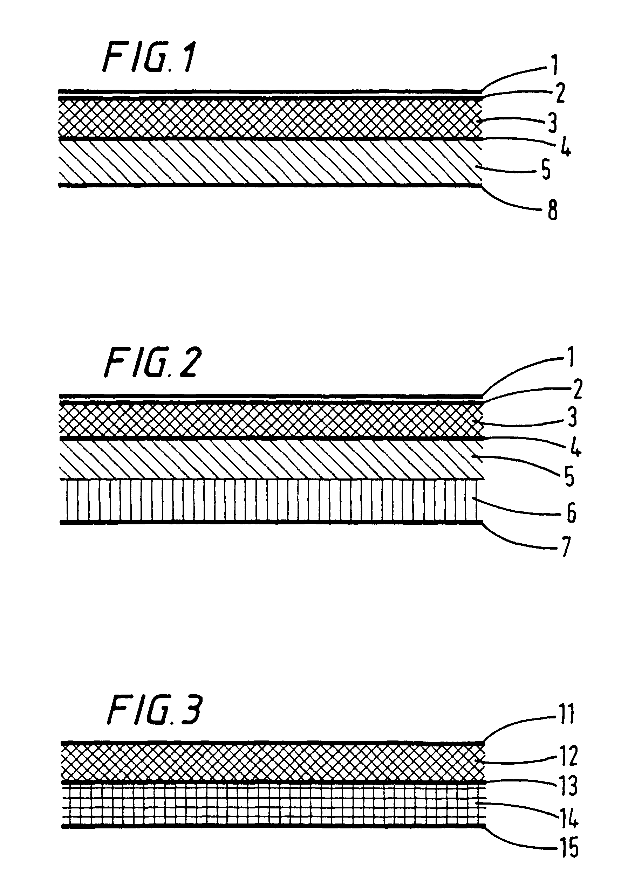

Thus in the embodiment of Figure 2 a piece or patch comprises, a UV barrier (1), a protective sheet (2) of UNIDRAW which is a nylon type resin, layers (3) and (5) impregnated with UV curable resin, one being a tissue and the other chopped glass fibres and a corona-treated polyethylene membrane (4) between the layers. These laminated layers are adhered to one surface of a double sided adhesive tape (6) the other side of the tape being covered by a release paper (7). Reference is made here to GB 2,289,436A.

As described above the piece or patch is supplied uncured packaged and de-aerated. The user takes the patch out of the sealed bag removes the release paper and adheres the patch to the surface to be covered. He then removes the UV barrier so that the patch can cure in the presence of light to a rigid and firmly secured entity.

In the Figure 1 embodiment the acrylic double sided tape and release paper are replaced by a layer of CAPRON (8) (a nylon material) but in other respects the Figure 1 embodiment is the same as the Figure 2 example. The layer of CAPRON (8) is provided to aid in the manufacture of the material but is removed before the material is sealed, by means of a suitable adhesive, to a surface to be covered.

Further to reduce the amount of air in the laminate a glass fibre cloth may be used in layer (5) instead of chopped fibres 12 in the patch described above and in any embodiment of the invention.

The laminated curable material described above may be used for general lining and repair purposes and with particular advantage for lining vessels and pipes. Trenchless underground pipe rehabilitation using a lining robot is particularly envisaged.

With regard to resins all curable resins known in the prepreg art are within the scope of the invention; unsaturated polyester resins and vinyl esters are preferred.

Figure 3 shows a sheet resin material in accordance with the invention comprises an outer layer of UNIDRAW, a nylon based resin; a layer of UV resin and tissue 12, a corona treated UV transparent polyethylene membrane 13; a glass cloth and UV resin layer 14; and a base layer 15 of CAPRON which is a nylon based resin. In this case the product is manufactured in reel form by the method shown in GB 2,243,111B, and is kept in a UV proof container until use. It is then caused to adhere to the surface to be covered, e.g. the interior wall of a storage tank and cured by being subject to UV radiation.

In each of these examples, the sequence of process steps for making the material essentially involves taking a sheet of a membrane material, for example clear polyethylene, giving a corona treatment to each surface of the membrane, and applying a resin layer to each side of the membrane so that the resin adheres to each surface as a consequence of the nature of the resin in conjunction with favourable surface properties of the membrane arising from its corona treatment, after which each resin layer is covered and the resultant product packaged for use.

## Claims

1. A flexible plastics based laminated sheet material comprising at least two layers (3 and 5) impregnated with curable resin material which is adapted to set solid when cured, characterised in that a barrier membrane (4) separates said two layers of curable material and has been corona treated on both sides, prior to being laminated with said two layers.

2. A sheet material according to Claim 1 characterised in that each resin material is UV curable and the barrier membrane is UV transparent.

3. A sheet material according to Claim 1 or Claim 2 characterised in that said barrier material is of polyethylene.

4. A sheet material according to any preceding claim characterised by outer protective layers of nylon based resin film.

5. A method of making a flexible plastics based laminated sheet material comprising the steps of providing a pair of layers of material impregnated with curable resin which is adapted to be cured to be set solid, applying external protective layers of film material to said curable resin layers, and packaging the resultant sheet material product, characterised in that a barrier membrane is corona treated on both sides and then is sandwiched between the two curable resin layers prior to formation of the laminate.

## Patentansprüche

1. Auf flexiblem Plastikmaterial basierendes laminares Folienmaterial, das zumindest zwei Schichten (3 und 5) aufweist, die mit einem härtbaren Harz imprägniert sind, das beim Härten fest wird, **dadurch gekennzeichnet, dass** eine Sperrmembrane (4) die beiden Schichten aus härtbarem Material trennt, die ehe sie mit den beiden Schichten eine laminare Verbindung eingeht einer Koronabehandlung unterzogen wurde.

2. Folienmaterial nach Anspruch 1, **dadurch gekennzeichnet, dass** jedes Harzmaterial UV-härtbar ist und die Sperrmembrane gegenüber UV-Strahlen transparent ist.

3. Folienmaterial nach Anspruch 1 oder Anspruch 2, **dadurch gekennzeichnet, dass** das Sperrmaterial Polyethylen ist.

4. Folienmaterial nach einem beliebigen der vorstehenden Ansprüche, **gekennzeichnet durch** äußere Schutzschichten aus einem auf Nylon basierenden Harzfilm.

5. Verfahren zur Herstellung eines flexiblen Plastikmaterials, das auf einem laminnaren Folienmaterial beruht mit den Verfahrensschritten des Bereitstellens eines Schichtenpaares aus Material, das mit einem härtbaren Harz imprägniert ist, das dazu bestimmt ist, beim Härten fest zu werden, Hinzufügen äußerer Schutzschichten aus Filmmaterial zu den Schichten mit härtbarem Harz und Verkapseln des so erhaltenen Produktes aus Folienmaterial, **dadurch gekennzeichnet, dass** eine Sperrmembrane beidseitig koronabehandelt wird und vor der Bildung des Laminats sandwichartig zwischen die beiden Schichten mit härtbarem Harz eingelegt wird.

## Revendications

1. Un matériau présent sous forme de feuille stratifiée à base de matière plastique souple comprenant au moins deux couches (3 et 5) imprégnées d'une matière de résine polymérisable qui est adaptée à prendre un état solide lorsqu'elle est polymérisée, caractérisé en ce qu'une membrane formant barrière (4) sépare lesdites deux couches de matière polymérisable et a subi un traitement corona sur ses deux faces avant d'être stratifiée avec lesdites deux couches.

2. Un matériau présent sous forme de feuille selon la revendication 1, caractérisé en ce que chaque matière de résine est polymérisable aux ultraviolets et la membrane formant barrière est transparente aux ultraviolets.

3. Un matériau présent sous forme de feuille selon la revendication 1 ou la revendication 2, caractérisé en ce que ladite matière formant barrière est du polyéthylène.

4. Un matériau présent sous forme de feuille selon une revendication précédente quelconque caractérisé par des couches protectrices externes d'un film de résine à base de nylon.

5. Un procédé de réalisation d'un matériau présent sous forme de feuille stratifiée à base de matière plastique souple comprenant les étapes consistant à prévoir une paire de couches de matière imprégnée de résine polymérisable qui est adaptée à être polymérisée pour prendre un état solide, appliquer des couches protectrices externes d'une matière en film auxdites couches de résine polymérisable, et conditionner le produit du matériau résultant sous forme de feuille, caractérisé en ce qu'une membrane formant barrière subit un traitement corona sur ses deux faces et est ensuite prise en sandwich entre les deux couches de résine polymérisable avant formation du stratifié.
